# EUROPEAN PATENT SPECIFICATION

(11) **EP 4 299 379 B1**
(45) Date of publication and mention of the grant of the patent: **17.06.2026**
(21) Application number: 22182340.4
(22) Date of filing: 30.06.2022
(51) Int. Cl.: B60R 3/02, E02F 9/08

(54) **STAIR SYSTEM FOR A WORKING MACHINE, WORKING MACHINE**
TREPPENSYSTEM FÜR EINE ARBEITSMASCHINE, ARBEITSMASCHINE
SYSTÈME D'ESCALIER POUR UN ENGIN DE TRAVAIL ET ENGIN DE TRAVAIL

(43) Date of publication of application: 03.01.2024
(73) Proprietor: Volvo Construction Equipment AB, 631 85 Eskilstuna (SE)
(72) Inventor: Lauer, Kai, 66679 Losheim am See (DE); Bauer, Peter, 54497 Morbach (DE); Schaefer, Thomas, 54295 Trier (DE)
(74) Representative: Lavoix

(56) References cited:
- DE-U1- 202013 001 302
- JP-A- 2000 328 601
- US-A1- 2016 101 739
- US-A1- 2017 246 992

## Description

### TECHNICAL FIELD

The invention relates to a stair system for a working machine, especially for a working machine having an upper and a lower carriage pivotable against each other and to a working machine with a stair system.

The invention can be applied in all vehicles having an upper and a lower carriage pivotable against each other, such as excavator and harvester. Although the invention will be described with respect to an excavator, the invention is not restricted to this particular vehicle, but may also be used in other vehicles such as harvesters or truck cranes.

### BACKGROUND

Current access system to the cabins of working machines like excavators are normally designed in accordance with standard ISO 2867. Nevertheless known access systems for working machines with pivotable upper and lower carriage using several steps integrated in parts of the working machine are very non-ergonomic and require a certain degree of mobility of the person to get on and off safely.

For working machines with fixed cabins stair systems with ladders fixed at a side of the working machine are described as for example in JP2000328601A, US 9,649,984 B2 and US 9,994,159 B2

### SUMMARY

An object of the invention is to provide a stair system for a working machine having an upper and a lower carriage pivotable against each other, which stair system provides an improvement of the safety ascent to and descent of the working machine, especially to a cabin of the working machine arranged at the upper carriage.

The object is achieved by a stair system according to claim 1. Namely the stair system for a working machine having an upper and a lower carriage pivotable against each other according to the invention comprises a foldable ladder movable between an upper end position and a lower end position, wherein in the upper end position the ladder is arrangeable at the working machine in a way that moving and pivoting of the working machine is not disturbed and wherein in the lower end position the ladder is able to provide access to the upper carriage, preferably to a cabin, of the working machine. Furthermore the stair system comprises a control system with at least one alignment sensor indicating alignment of the upper and lower carriage and with a controller which is able to block or enable a movement of the foldable ladder based on an output of the alignment sensor.

The invention is based on the recognition that by the provision of a stair system which comprises a foldable ladder, which in the upper end position does not disturb pivoting and moving the working machine the access to the upper carriage and especially a cabin installed at the upper carriage can be widely improved compared to known system.

The invention further includes the recognition that for a safe ascent and descent to the upper carriage and a safe working of the working machine it is further necessary to control the movement of the foldable ladder based on an information of alignment of the upper and lower carriage. Preferably only if both are aligned to each other or just rotated several degrees to each other, the controller enables a movement of the foldable ladder. If the upper and the lower carriage are rotated more than a predetermined range to each other, for example 20 degrees to each other the controller will block a movement of the foldable ladder.

Preferably the stair system is retrofittable. It is further preferred that the stair system is installed in a way that it does not affect the existing ladder system, which can always be used manually as it is electricity and control independent.

According to one embodiment, the upper end position is between the upper and lower carriage, once the ladder is arranged at the working machine. Hereby the ladder is stored between the upper and lower carriage and thus does not only not disturb the movement or pivoting of the working machine but also does not stick out from the working machine and thus is stored with improved safety.

According to a further embodiment the foldable ladder is arranged in horizontal position in the upper end position, when the stair system is arranged at the working machine and thus storing of the ladder is further improved.

According to a further embodiment in the lower end position the foldable ladder has an angle in the range of 10 to 30° to a vertical direction of the working machine and/or wherein a turning radius of the ladder is not larger than a turning radius of a door of the working machine. This allows for a very ergonomic ascent and descent and also for an arrangement of the ladder in the lower end position which does not disturb working or passing near the working machine. Preferably the ladder is arranged within the width of a door of the cabin to further improve the ergonomic ascent and descent.

According to a further embodiment one ladder stringer is pivotably connectable to the working machine via a hinge and the ladder has preferably foldable steps. With this embodiment the stair system can be constructed with enhanced space and material savings.

Preferably the foldable ladder comprises a folding construction having two centres of rotation. With such a folding construction a comfortable ladder with two ladder stringers can be used and easily stored in the upper end position without disturbing the working machine. It is then further preferred that the foldable ladder comprises a bearing fork which is pivotably connectable to the working machine and at which two ladder stringers are pivotably arranged, wherein the bearing fork is preferably pivotably connectable to a main bracket of the working machine. Especially with this embodiment with just one linear movement, the ascent/descent from a horizontal resting position in the upper end position by means of a turn-tilt movement, swivelling out 90° and thus realizing an ascent angle of approx. 20° to ensure an ergonomic one can be realized. Thus one centre of rotation is used for swivelling out the foldable ladder, the second one for tilting the ladder stringers with the steps.

According to a further embodiment the foldable ladder is arranged and constructed to be moved manually. Thus there is either no need for an automatic drive or a manually operation mode is provided for cases, in which an automatic drive does not function.

According to a further embodiment the stair system further comprises at least one movement sensor detecting a moving state of the working machine and/or at least one position sensor detecting a position of the foldable ladder and/or at least one surveillance sensor for space surveillance of a scope of the foldable ladder, wherein the controller is further able to block or enable a movement of the foldable ladder and/or the working machine based on an output of the movement sensor and/or the position sensor and/or the surveillance sensor. Thus the controller may be able to block a movement of the foldable ladder if the working machine is moving or the surveillance detector detects an obstacle in the monitored space. The controller may further be able to enable the movement of the foldable ladder if the working machine is not in motion and the monitored space is free of obstacles. Furthermore the controller may be able to block a pivoting and/or a movement of the working machine if the foldable ladder is not in the upper end position or if an obstacle in the monitored space is detected. Thus the safety of the stair system is further enhanced. In a further embodiment the controller is further able to receive a signal from a control unit of the working machine indicating a position of a control lockout lever of the working machine. In this embodiment the controller is able to block a movement of the foldable ladder if the control lockout lever is in an unlocked position, where working and travelling operations are possible and to enable movement if the control lockout lever is in a locked position wherein further control levers and pedals are locked to prevent inadvertent operation of the working machine.

According to a further embodiment the controller is further able to allow a pivoting of the upper carriage of the working up to a predetermined degree, for example up to 60 degree if the foldable ladder is in its lower position. This is helpful for certain use cases, for example during sewage works, when the operator intends to leave the cabin and has to bridge a ditch.

According to a further embodiment the stair system is an automatic stair system with a ladder drive system comprising at least one electrical or hydraulic, preferably linearly extending, actuator and a coupling rod driving the foldable ladder. With this embodiment the ladder can be driven and controlled automatically. Preferably the actuator is intelligent and can be controlled via Software and a CAN-Bus System.

According to a further embodiment the control system comprises at least one control element, preferably a switch, to activate the ladder drive system, preferably two control elements, of which one is arrangeable at a cabin of the working machine and the other one is arrangeable reachably from the ground. Thus the operator can activate the ladder drive system from either the cabin or from the ground.

According to a further embodiment the control system comprises a warning unit, which is able to output a warning signal to an operator if a movement of the foldable ladder and/or the working machine is blocked or enabled by the control system, wherein preferably the warning signal differs depending on the sensor output leading to the block of the respective movement. Thus the operator will get a notice from the control system if movement of the foldable or pivoting or moving of the working machine is blocked and preferably the notice will also indicate what is the cause for the blocking.

For example, if the operator wants to fold out the foldable ladder and upper carriage is not aligned or the control lockout lever is unlocked, the notice could be "Align upper frame and lower the control lockout lever". If the operator raises the control lockout lever while movable ladder is not in upper end position, the message could be "Lower Control Lockout Lever and fold in the movable ladder".

According to a further embodiment the stair system further comprises an acoustic signaller, which is controlled via the controller and which is turned on during a movement of the foldable ladder.

According to a further embodiment an actuator sensor for a status of the electrical or hydraulic actuator and wherein the control system is further able to block or enable a movement of the foldable ladder based on an output of the actuator sensor. Thus if a malfunction of the actuator is indicated movement of the foldable ladder can be blocked.

According to a further embodiment the control system further comprise a telltale indicating a position of the foldable ladder. For example the signals from the telltale may be upper end position: no telltale; in-between position: yellow telltale, lower end position: green telltale and if a actuator status is not ok red telltale.

In a further embodiment the control system is able to initiate a move back of some degree or to its previous end position if a movement of the foldable ladder is blocked during fold in or fold out.

According to a further aspect of the invention the object is also achieved with a working machine having an upper and a lower carriage pivotable against each other with a stair system according to any of the embodiments described above. The working machine may by for example an excavator or a harvester or a truck crane.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1A is a schematic view of an excavator with a stair system according to a preferred embodiment,
Fig. 1B is a detailed view of the stair system according of Fig. 1A,
Fig. 2A is a perspective view of a further embodiment of a stair system according to the invention from a bottom side,
Fig. 2B is a further perspective view of the embodiment of Fig. 2A,
Fig. 2C is a further perspective view of the embodiment of Fig. 2A from above with the foldable ladder in a lower end position,
Fig. 3A is a perspective view of a working machine with a further embodiment of a stair system according to the invention,
Fig. 3B is a further perspective view of the working machine of Fig. 3A,
Fig. 3C is a further perspective view of the working machine of Fig. 3A,
Fig. 3D shows two detailed views of the stair system of Fig. 3A,
Fig. 4 is a perspective view of a further embodiment of a stair system.

### DETAILED DESCRIPTION OF EXAMPLE EMBODIMENTS OF THE INVENTION

It is to be understood that the present invention is not limited to the embodiments described above and illustrated in the drawings; rather, the skilled person will recognize that many changes and modifications may be made within the scope of the appended claims.

Like reference character refer to like elements throughout the description.

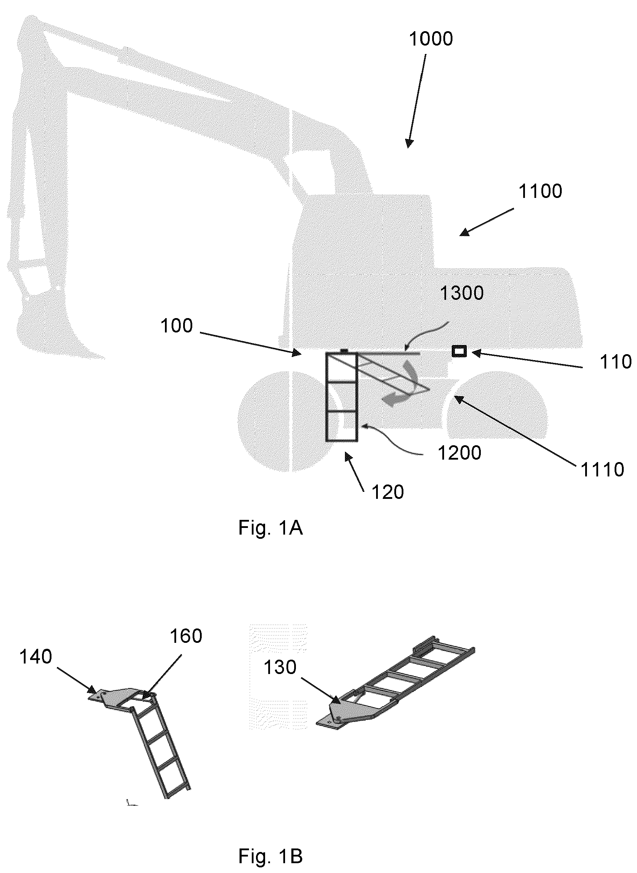

Fig. 1A is a schematic view of an excavator 1000 with a stair system according to a preferred embodiment. The excavator 1000 has an upper carriage 1100 and a lower carriage 1110 pivotable against each other. At the excavator 1000 a stair system 100 is arranged. The stair system 100 comprises a foldable ladder 120 movable between an upper end position 1300 and a lower end position 1200. In the upper end position 1300 the ladder is arranged at the working machine in a way that moving and pivoting of the working machine is not disturbed and in the lower end position the ladder provides access to a cabin of the working machine. The stair system further comprises a control system comprising at least one alignment sensor 110 indicating alignment of the upper and lower carriage and a controller which is able to block or enable a movement of the foldable ladder based on an output of the alignment sensor. The controller may be a separate controller or integrated within the machine controller. The upper end position 1300 in the shown embodiment is between the upper and lower carriage and the foldable ladder 120 is arranged in horizontal position in this upper end position.

One object of the stair system is to ensure that the operator can enter the cabin of the excavator more safely. The stair system is herein attached to an upper, movable platform and is brought into its lower end position 1200 in two rotation levels by means of an electric, linearly extending actuator 150 and a coupling rod (not shown). The foldable ladder may be operated via two separate control elements (not shown), preferably switches, that enable operation from outside the working machine and from the cabin.

The shown stair system can be retrofitted also in addition to the existing ladder system of today's working machines and does not affect the existing ladder system, which can always be used manually as it is electricity independent as a back-up solution. If the upper platform is rotated several degrees to the lower, the ascent system may also be able to be operated and to guarantee safe ascent and descent from the cabin, depending on the settings of the controller and the space available at the respective working machine.

Fig. 1B is a detailed view of the stair system according of Fig. 1A showing the foldable ladder 120 in the lower end position (left) and in the upper end position (right). In the lower end position the ladder has an angle in the range of 10 to 30° to a vertical direction of the working machine. Preferably a turning radius of the ladder is not larger than a turning radius of a door of the working machine. Thus even in the lower position the ladder does not affect passing by the working machine and the ascent or descent to the cabin is rendered more comfortable.

In the shown embodiment the foldable ladder comprises a bearing fork 130, which is pivotably connected to the working machine and at which two ladder stringers are pivotably arranged, wherein the bearing fork is preferably pivotably connectable to a main bracket 140 of the working machine. Thus the foldable ladder comprises a folding construction having two centres of rotation, one around which the bearing fork rotates to swivelling out the bearing fork and the ladder stringers and the second one, around which the ladder stringers rotate to fold down.

The stair system here is an automatic stair system with a ladder drive system comprising one electrical linearly extending actuator (not shown here) and a coupling rod 150 driving the foldable ladder.

The stair system further comprises a movement sensor detecting a moving state of the working machine and a position sensor detecting a position of the foldable ladder and a surveillance sensor for space surveillance of a range of motion of the foldable ladder, wherein the controller is further able to block or enable a movement of the foldable ladder and/or the working machine based on an output of the movement sensor and/or the position sensor and/or the surveillance sensor. Thus the controller is able to block a movement of the foldable ladder if the working machine is moving or the surveillance detector detects an obstacle in the monitored space. The controller is further able to enable the movement of the foldable ladder if the working machine is not in motion and the monitored space is free of obstacles. Furthermore the controller is able to block a pivoting and/or a movement of the working machine if the foldable ladder is not in the upper end position or if an obstacle in the monitored space is detected. Thus the safety of the stair system is further enhanced. The controller is further able to receive a signal from a control unit of the working machine indicating a position of a control lockout lever of the working machine. In this embodiment the controller is thus able to block a movement of the foldable ladder if the control lockout lever is in an unlocked position, where working and travelling operations are possible and to enable movement if the control lockout lever is in a locked position wherein further control levers and pedals are locked to prevent inadvertent operation of the working machine. The stair system further may comprise an actuator sensor for a status of the electrical or hydraulic actuator and wherein the control system is further able to block or enable a movement of the foldable ladder based on an output of the actuator sensor.

In summary preconditions to fold in/out the foldable ladder are working machine not moving/pivoting, control lockout lever in locked position, alignment of upper and lower carriage and status of the actuator is ok.

Preferably the control system further comprises a warning unit, which is able to output a warning signal to an operator if a movement of the foldable ladder and/or the working machine is blocked or enabled by the control system, wherein preferably the warning signal differs depending on the sensor output leading to the block of the respective movement.

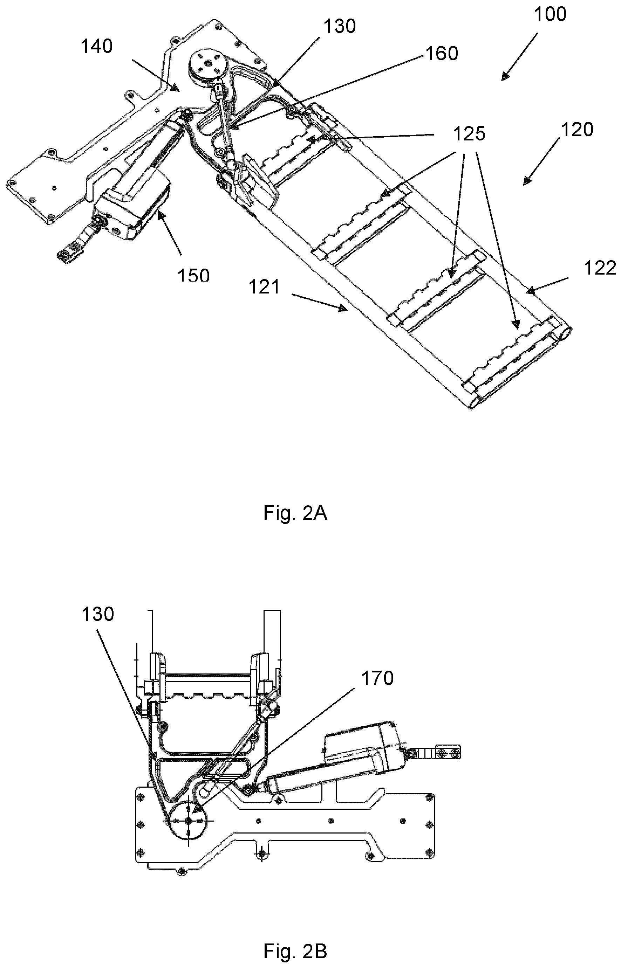

Fig. 2A is a perspective view of a further embodiment of a stair system 100 according to the invention from a bottom side. The stair system 100 resembles the stair system 100 of Fig. 1A and 1B, thus merely the further details not shown in Fig. 1A and 1B are described in the following. The foldable ladder 120 comprises two ladder stringers 121, 122 with four steps 125. The ladder stringers 121, 122 are pivotably connected to the bearing fork 130. The bearing fork is pivotably connected to a main bracket 140 of a respective working machine. The foldable ladder is driven for fold in and fold out via an electrical linear actuator 150 together with a coupling rod 160. The actuator 150 is for folding out pulling out and the bearing fork 130 is then turned clockwise (view from the bottom side). Due to the non-coaxiality of the pivot points of the bearing fork and the coupling rod 160, the distance of the coupling rod is shortened, rotating around its pivot point. Therefore the ladder stringers fixed at the bearing fork, and connected to the coupling rod are subject to a tilting movement and able to reach its end point in the lower end position in a helical movement.

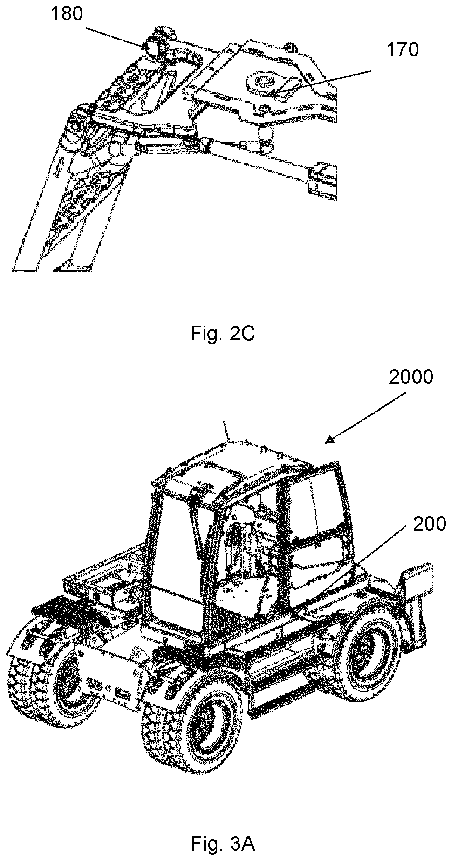

Fig. 2B is a further perspective view of the embodiment of Fig. 2A. Herein a first centre of rotation 170 around which the bearing fork 130 and with the bearing fork also the ladder stringers rotate to swivelling out. Fig. 2C is a further perspective view of the embodiment of Fig. 2A from above with the foldable ladder in a lower end position. Herein a second centre of rotation 180 is shown around which the ladder stringers move to tilt down or up.

Fig. 3A is a perspective view of a working machine 2000 with a further embodiment of a stair system 200 according to the invention. The foldable ladder 220 is in the shown state in its upper end position. The foldable ladder 220 is in a horizontal position and does not protrude from the working machine.

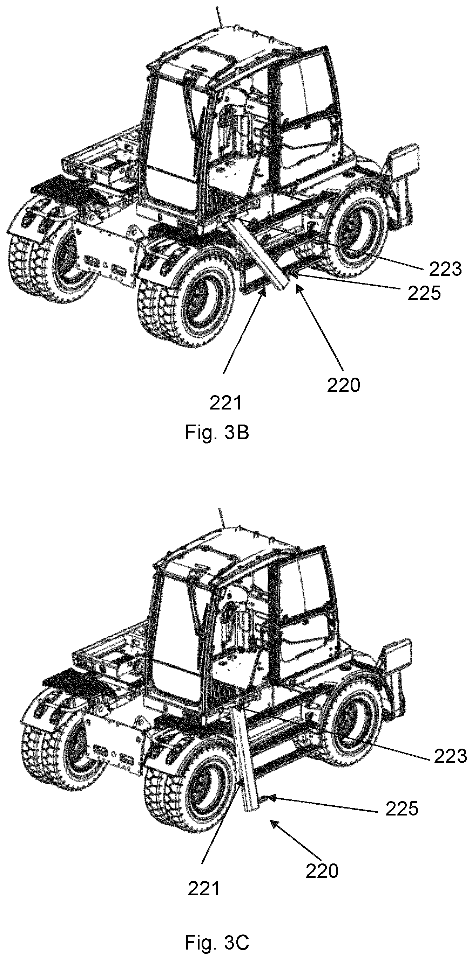

Fig. 3B is a further perspective view of the working machine of Fig. 3A with foldable ladder 220 in an in-between position between the upper end position (Fig. 3A) and the lower end position (Fig. 3C). The ladder stringer 221 is pivotably connected to the working machine 2000 via a hinge 223. In the shown embodiment the ladder has foldable steps 225. The foldable steps 225 are in the shown embodiment automatically fold out and in during the movement of the ladder stringer.

Fig. 3C is a further perspective view of the working machine of Fig. 3A and shows the working machine 2000 with the stair system 200 in the lower end position, where the ladder provides easy and safe access to the cabin of the working machine.

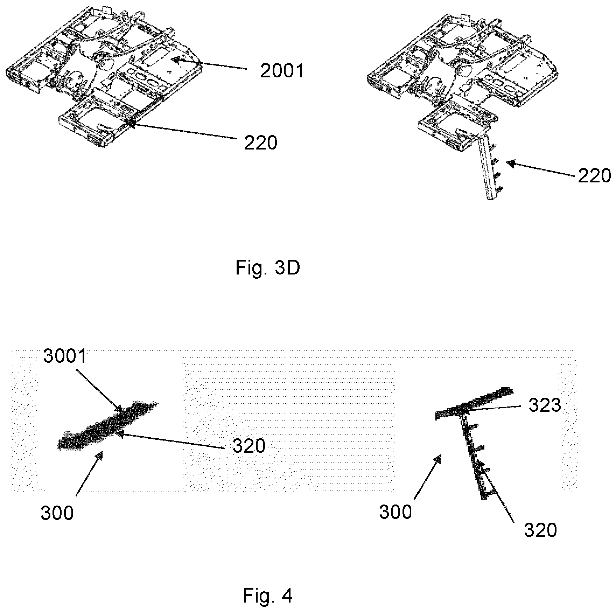

Fig. 3D shows two detailed views of the stair system of Fig. 3A showing the foldable ladder 220 in the upper end position (left) and in the lower end position (right). In the upper end position the ladder is completely arranged within a platform 2001 of the upper carriage. In the lower end position the ladder has an angle in the range of 10 to 30° to a vertical direction of the working machine.

Fig. 4 is a perspective view of a further embodiment of a stair system 300 showing the foldable ladder 320 in the upper end position (left) and in the lower end position (right) . The stair system itself is constructed and functions as the one shown in Fig. 3A to 3D. The main difference is that the stair system 300 is pivotably connected to a footstep 3001 of the working machine via a hinge 323. In the upper end position the foldable ladder 320 is arranged below of the footstep. In further embodiments the foldable ladder may also be arranged at a side of the footstep.

### REFERENCE SIGNS

- 100: stair system
- 120: foldable ladder
- 121: ladder stringer
- 122: ladder stringer
- 125: step
- 130: bearing fork
- 140: main bracket
- 150: actuator
- 160: coupling rod
- 170: centre of rotation
- 180: centre of rotation
- 200: stair system
- 220: foldable ladder
- 221: ladder stringer
- 223: hinge
- 225: foldable steps
- 300: stair system
- 320: foldable ladder
- 323: hinge
- 1000: excavator
- 1100: upper carriage
- 1110: lower carriage
- 1200: lower end position
- 1300: upper end position
- 2000: working machine
- 2001: platform
- 3001: footstep

## Claims

1. A stair system (100) for a working machine (1000) having an upper carriage (1100) and a lower carriage (1110) pivotable against each other comprising:
- a foldable ladder (120) movable between an upper end position (1300) and a lower end position (1200), wherein in the upper end position the ladder is arrangeable at the working machine in a way that moving and pivoting of the working machine is not disturbed and wherein in the lower end position the ladder is able to provide access to the upper carriage, preferably to a cabin, of the working machine;
- a control system,
the stair system being **characterized in that** the control system comprises:
- at least one alignment sensor (110) indicating alignment of the upper and lower carriage;
- a controller which is able to block or enable a movement of the foldable ladder based on an output of the alignment sensor.

2. A stair system (100) according to claim 1, wherein the upper end position (1300) is between the upper (1100) and lower carriage (1110).

3. A stair system (100) according to one of the previous claims, wherein the foldable ladder is arranged in horizontal position in the upper end position (1300).

4. A stair system (100) according to one of the previous claims, wherein in the lower end position the ladder has an angle in the range of 10 to 30° to a vertical direction of the working machine and/or wherein a turning radius of the ladder is not larger than a turning radius of a door of the working machine.

5. A stair system (100) according to one of the previous claims, wherein one ladder stringer (121) is pivotably connectable to the working machine via a hinge and wherein the ladder has preferably foldable steps (125).

6. A stair system (100) according to one of claims 1 to 4, wherein the foldable ladder comprises a folding construction having two centres of rotation (170, 180).

7. A stair system (100) according to claim 6, wherein the foldable ladder (120) comprises a bearing fork (130) which is pivotably connectable to the working machine and at which two ladder stringers (121, 122) are pivotably arranged, wherein the bearing fork is preferably pivotably connectable to a main bracket (140) of the working machine.

8. A stair system (100) according to one of the previous claims, wherein the foldable ladder (120) is arranged and constructed to be moved manually.

9. A stair system (100) according to one of the previous claims further comprising at least one movement sensor detecting a moving state of the working machine and/or at least one position sensor detecting a position of the foldable ladder and/or at least one surveillance sensor for space surveillance of a range of motion of the foldable ladder, wherein the controller is further able to block or enable a movement of the foldable ladder and/or the working machine based on an output of the movement sensor and/or the position sensor and/or the surveillance sensor.

10. A stair system (100) according to one of the previous claims, wherein the stair system is an automatic stair system with a ladder drive system comprising at least one electrical or hydraulic, preferably linearly extending, actuator (150) and a coupling rod (160) driving the foldable ladder.

11. A stair system (100) according to claim 10, wherein the control system comprises at least one control element, preferably one switch, to activate the ladder drive system, preferably two control elements, of which one is arranged at a cabin of the working machine and the other one is arranged reachably from the ground.

12. A stair system (100) according to one of the previous claims, wherein the control system comprises a warning unit, which is able to output a warning signal to an operator if a movement of the foldable ladder and/or the working machine is blocked or enabled by the control system, wherein preferably the warning signal differs depending on the sensor output leading to the block of the respective movement.

13. A stair system (100) according to one of claims 10 to 12, comprising an actuator sensor for a status of the electrical or hydraulic actuator and wherein the control system is further able to block or enable a movement of the foldable ladder based on an output of the actuator sensor.

14. A working machine (1000, 2000) having an upper and a lower carriage pivotable against each other with a stair system (100) according one of the previous claims.

15. A working machine (1000, 2000) according to claim 14, wherein the working machine is an excavator, a truck crane or a harvester.

## Patentansprüche

1. Treppensystem (100) für eine Arbeitsmaschine (1000) mit einem Oberwagen (1100) und einem Unterwagen (1110), die gegeneinander schwenkbar sind, umfassend:
- eine klappbare Leiter (120), die zwischen einer oberen Endposition (1300) und einer unteren Endposition (1200) beweglich ist, wobei die Leiter in der oberen Endposition so an der Arbeitsmaschine angeordnet werden kann, dass das Bewegen und Schwenken der Arbeitsmaschine nicht beeinträchtigt wird, und wobei die Leiter in der unteren Endposition einen Zugang zum Oberwagen, vorzugsweise zu einer Kabine, der Arbeitsmaschine ermöglicht;
- ein Steuersystem,
wobei das Treppensystem **dadurch gekennzeichnet ist, dass** das Steuersystem Folgendes umfasst:
- mindestens einen Ausrichtungssensor (110), der die Ausrichtung des Ober- und des Unterwagens anzeigt;
- ein Steuergerät, das in der Lage ist, eine Bewegung der klappbaren Leiter basierend auf einem Ausgangssignal des Ausrichtungssensors zu blockieren oder zu ermöglichen.

2. Treppensystem (100) nach Anspruch 1, wobei die obere Endposition (1300) zwischen dem Oberwagen (1100) und dem Unterwagen (1110) liegt.

3. Treppensystem (100) nach einem der vorhergehenden Ansprüche, wobei die klappbare Leiter in der oberen Endposition (1300) in horizontaler Lage angeordnet ist.

4. Treppensystem (100) nach einem der vorhergehenden Ansprüche, wobei die Leiter in der unteren Endposition einen Winkel im Bereich von 10° bis 30° gegenüber der Vertikalen der Arbeitsmaschine aufweist und/oder wobei der Wenderadius der Leiter nicht größer ist als der Wenderadius einer Tür der Arbeitsmaschine.

5. Treppensystem (100) nach einem der vorhergehenden Ansprüche, wobei ein Leiterholm (121) über ein Scharnier schwenkbar mit der Arbeitsmaschine verbunden werden kann und wobei die Leiter vorzugsweise klappbare Stufen (125) aufweist.

6. Treppensystem (100) nach einem der Ansprüche 1 bis 4, wobei die klappbare Leiter eine Klappkonstruktion mit zwei Drehpunkten (170, 180) aufweist.

7. Treppensystem (100) nach Anspruch 6, wobei die klappbare Leiter (120) eine Lagergabel (130) umfasst, die schwenkbar mit der Arbeitsmaschine verbunden werden kann und an der zwei Leiterholme (121, 122) schwenkbar angeordnet sind, wobei die Lagergabel vorzugsweise schwenkbar mit einem Hauptträger (140) der Arbeitsmaschine verbunden werden kann.

8. Treppensystem (100) nach einem der vorhergehenden Ansprüche, wobei die klappbare Leiter (120) so angeordnet und ausgebildet ist, dass sie manuell bewegt werden kann.

9. Treppensystem (100) nach einem der vorhergehenden Ansprüche, ferner umfassend mindestens einen Bewegungssensor, der einen Bewegungszustand der Arbeitsmaschine erfasst, und/oder mindestens einen Positionssensor, der eine Position der klappbaren Leiter erfasst, und/oder mindestens einen Überwachungssensor zur räumlichen Überwachung eines Bewegungsbereichs der klappbaren Leiter, wobei das Steuergerät ferner in der Lage ist, eine Bewegung der klappbaren Leiter und/oder der Arbeitsmaschine basierend auf einem Ausgang des Bewegungssensors und/oder des Positionssensors und/oder des Überwachungssensors zu blockieren oder zu ermöglichen.

10. Treppensystem (100) nach einem der vorhergehenden Ansprüche, wobei das Treppensystem ein automatisches Treppensystem mit einem Leiterantriebssystem ist, das mindestens einen elektrischen oder hydraulischen, vorzugsweise linear verlaufenden, Aktuator (150) und eine die klappbare Leiter antreibende Kupplungsstange (160) umfasst.

11. Treppensystem (100) nach Anspruch 10, wobei das Steuersystem mindestens ein Bedienelement, vorzugsweise einen Schalter, zur Aktivierung des Leiterantriebssystems umfasst, idealerweise zwei Bedienelemente, von denen eines an einer Kabine der Arbeitsmaschine und das andere so angeordnet ist, dass es vom Boden aus erreichbar ist.

12. Treppensystem (100) nach einem der vorhergehenden Ansprüche, wobei das Steuersystem eine Warneinheit umfasst, die in der Lage ist, ein Warnsignal an einen Bediener auszugeben, wenn eine Bewegung der klappbaren Leiter und/oder der Arbeitsmaschine durch das Steuersystem blockiert oder ermöglicht wird; wobei sich das Warnsignal vorzugsweise in Abhängigkeit vom Sensorausgang ändert, was zur Blockierung der jeweiligen Bewegung führt.

13. Treppensystem (100) nach einem der Ansprüche 10 bis 12, umfassend einen Aktuatorsensor für einen Status des elektrischen oder hydraulischen Aktuators, wobei das Steuersystem ferner in der Lage ist, eine Bewegung der klappbaren Leiter basierend auf einem Ausgang des Aktuatorsensors zu blockieren oder zu ermöglichen.

14. Arbeitsmaschine (1000, 2000) mit einem Ober- und einem Unterwagen, die gegeneinander schwenkbar sind, und mit einem Treppensystem (100) nach einem der vorhergehenden Ansprüche.

15. Arbeitsmaschine (1000, 2000) nach Anspruch 14, wobei die Arbeitsmaschine ein Bagger, ein Autokran oder eine Erntemaschine ist.

## Revendications

1. Système d'escalier (100) pour une machine de travail (1000) doté d'un chariot supérieur (1100) et d'un chariot inférieur (1110) pivotables l'un par rapport à l'autre, comprenant :
- une échelle pliable (120) mobile entre une position finale supérieure (1300) et une position finale inférieure (1200), dans lequel, dans la position finale supérieure, l'échelle peut être disposée sur la machine de travail de manière à ne pas gêner le déplacement et le pivotement de celle-ci et dans lequel, dans la position finale inférieure, l'échelle peut permettre d'accéder au chariot supérieur, de préférence à une cabine, de la machine de travail ;
- un système de commande,
le système d'escalier étant **caractérisé en ce que** le système de commande comprend :
- au moins un capteur d'alignement (110) indiquant l'alignement du chariot supérieur et inférieur ;
- un dispositif de commande capable de bloquer ou d'autoriser le mouvement de l'échelle pliable en fonction de la sortie du capteur d'alignement.

2. Système d'escalier (100) selon la revendication 1, dans lequel la position finale supérieure (1300) se situe entre le chariot supérieur (1100) et le chariot inférieur (1110).

3. Système d'escalier (100) selon l'une quelconque des revendications précédentes, dans lequel l'échelle pliable est disposée en position horizontale dans la position finale supérieure (1300).

4. Système d'escalier (100) selon l'une quelconque des revendications précédentes, dans lequel, dans la position finale inférieure, l'échelle présente un angle compris entre 10 et 30° par rapport à la direction verticale de la machine de travail et/ou dans lequel le rayon de rotation de l'échelle n'est pas plus grand que le rayon de rotation d'une porte de la machine de travail.

5. Système d'escalier (100) selon l'une quelconque des revendications précédentes, dans lequel un montant d'échelle (121) peut être relié de manière pivotante à la machine de travail par une charnière et dans lequel l'échelle comporte de préférence des marches pliables (125).

6. Système d'escalier (100) selon l'une quelconque des revendications 1 à 4, dans lequel l'échelle pliable comprend une construction pliante dotée des deux centres de rotation (170, 180).

7. Système d'escalier (100) selon la revendication 6, dans lequel l'échelle pliable (120) comprend une fourche de support (130) qui est reliée de manière pivotante à la machine de travail et à laquelle deux limons d'échelle (121, 122) sont disposés de manière pivotante, dans lequel la fourche de support est de préférence reliée de manière pivotante à un support principal (140) de la machine de travail.

8. Système d'escalier (100) selon l'une quelconque des revendications précédentes, dans lequel l'échelle pliable (120) est disposée et construite de façon à être déplacée manuellement.

9. Système d'escalier (100) selon l'une quelconque des revendications précédentes, comprenant en outre au moins un capteur de mouvement détectant un état de mouvement de la machine de travail et/ou au moins un capteur de position détectant une position de l'échelle pliable et/ou au moins un capteur de surveillance pour la surveillance spatiale d'une plage de mouvement de l'échelle pliable, dans lequel le dispositif de commande est en mesure de bloquer ou d'autoriser un mouvement de l'échelle pliable et/ou de la machine de travail sur la base d'une sortie du capteur de mouvement et/ou du capteur de position et/ou du capteur de surveillance.

10. Système d'escalier (100) selon l'une quelconque des revendications précédentes, dans lequel le système est automatique et comporte un dispositif d'entraînement de l'échelle comprenant au moins un actionneur (150) électrique ou hydraulique, de préférence à extension linéaire, et une tige d'accouplement (160) entraînant l'échelle pliable.

11. Système d'escalier (100) selon la revendication 10, dans lequel le système de commande comprend au moins un dispositif de commande, de préférence un interrupteur, pour activer le système d'entraînement de l'échelle, de préférence deux dispositifs de commande, dont l'un est placé dans une cabine de la machine de travail et l'autre est accessible depuis le sol.

12. Système d'escalier (100) selon l'une quelconque des revendications précédentes, dans lequel le système de commande comprend une unité capable d'émettre un signal d'avertissement à l'intention d'un opérateur si un mouvement de l'échelle pliable et/ou de la machine de travail est bloqué ou autorisé par le système de commande, le signal d'avertissement étant de préférence différent en fonction de la sortie du capteur entraînant le blocage du mouvement respectif.

13. Système d'escalier (100) selon l'une quelconque des revendications 10 à 12, comprenant un capteur de l'actionneur indiquant l'état de l'actionneur électrique ou hydraulique et dans lequel le système de commande est en outre capable de bloquer ou d'autoriser un mouvement de l'échelle pliable en fonction de la sortie du capteur de l'actionneur.

14. Machine de travail (1000, 2000) comportant des chariots supérieur et inférieur pivotant l'un par rapport à l'autre avec un système d'escalier (100) selon l'une quelconque des revendications précédentes.

15. Machine de travail (1000, 2000) selon la revendication 14, dans laquelle ladite machine est une excavatrice, un camion-grue ou une moissonneuse-batteuse.
